# EUROPEAN PATENT APPLICATION

(11) **EP 2 670 117 A1**
(43) Date of publication of application: **04.12.2013**
(21) Application number: 12170029.8
(22) Date of filing: 30.05.2012
(51) Int. Cl.: H04M 1/65, G06F 3/16, G11B 5/004, G11B 27/34, G11B 31/00, H04M 11/10

(54) **Digital memory system**

(71) Applicant: MFA Informatik AG, 4435 Niederdorf (CH)
(72) Inventor: Schneider, Andreas, 4435 Niederdorf (CH)
(74) Representative: Latscha, Silvan

(57) **Abstract**

A digital memory system comprises: a mobile recording device having a first docking structure, a recording equipment for recording a voice message and a data storage for storing the recorded voice message; and a docking station having a second docking structure corresponding to the first docking structure of the recording device and a connection structure for connecting the docking station to an end device The first docking structure of the mobile recording device, the second docking structure of the docking station and the connection structure of the docking station are arranged to transmit the voice message stored in the data memory of the mobile recording device to the end device. The docking station comprises a temporary data storage in which the voice message transmitted from the data storage of the mobile recording device is storable before being transmitted to the end device. The digital memory system according to the invention makes a convenient and efficient gathering of notes in the form of voice messages possible. Particularly providing the temporary data storage within the docking station allows for a fast and comfortable transfer of the voice messages recorded on and stored in the mobile recording device.

## Description

### Technical Field

The present invention relates to a digital memory system according to the preamble of independent claim 1. Such digital memory systems comprising a mobile recording device having a first docking structure, a recording equipment for recording a voice message and a data storage for storing the recorded voice message, as well as a docking station having a second docking structure corresponding to the first docking structure of the recording device and a connection structure for connecting the docking station to an end device, can be used for gathering and managing spoken notes.

### Background Art

In daily life, it is popular to catch thoughts or ideas on notes in order to memorize them and to have them ready for further actions. For example, in housekeeping it is common to make a note when realizing that something is needed and should be bought wherein often such notes are then used for having a shopping list ready when needed.

Whereas in former days notes have typically been gathered by pen on paper or similar such as, e.g., on post-it stickers, in the last years electronic devices being capably of gathering notes became more and more popular. Also, the way of recording the notes has changed over the years from writing by pen over typing on a keyboard or touch-screen to speaking in a microphone of a mobile device. Particularly, with the growing functional capabilities of mobile electronic devices the latter is getting more and more popular and is also available to handicapped, e.g. blind, people.

Whereas gathering notes as voice messages is rather comfortable and efficient, the further processing of voice messages often is not satisfying. For example, in housekeeping notes gathered via voice messages are typically to be transferred either onto a printed list, e.g. as paper shopping list, or in an electronic list, e.g. for online shopping. Therefore, notes in the form of voice messages are often transferred to computers or networks in order to be further processed such as, e.g. transformed to written text. Thereby, transferring the voice messages from a mobile device on which they are recorded to a computer or network can be cumbersome. Typically, the mobile device has to be connected to the computer, the computer has to be available or launched, a suitable software has to be started, transfer of the voice messages has to be triggered, the voice messages have to be actively deleted on the mobile device after transfer to the computer and the mobile device has to be disconnected. In particular, since voice messages are usually stored in rather large data files on the mobile device in order to provide sufficient quality, the transfer of the data files from the mobile device to the computer can be time consuming and inefficient.

Therefore, there is a need for a memory system allowing for conveniently and efficiently gathering and processing notes.

### Disclosure of the Invention

According to the invention this need is settled by a digital memory system as it is defined by the features of independent claim 1. Preferred embodiments of the digital memory system are subject of the dependent claims.

In particular, the invention deals with a digital memory system comprising a mobile recording device having a first docking structure, a recording equipment for recording a voice message and a data storage for storing the recorded voice message. The digital memory system further comprises a docking station having a second docking structure corresponding to the first docking structure of the recording device and a connection structure for connecting the docking station to an end device.

The first docking structure of the mobile recording device, the second docking structure of the docking station and the connection structure of the docking station are arranged to transmit the voice message stored in the data memory of the mobile recording device to the end device, e.g. when the mobile recording device is docked to the docking station. Further, the docking station comprises a temporary data storage in which the voice message transmitted from the data storage of the mobile recording device is storable before being transmitted to the end device.

In the context of the invention, the term "docking station" relates to an arrangement intended to connect a mobile or portable device such as the mobile recording device to a target such as the end device. The end device can be a computer such as a server, desktop computer, personal computer or laptop or a network of such computers. The data storage of the mobile recording device and/or the temporary data storage of the docking station can be a flash memory, hard disk or any other suitable storage device. The voice message can be stored in the data storage of the mobile recording device in any suitable format such as, e.g., in the known waveform audio file (WAV) format. The connection structure of the docking station can, e.g., comprise a universal serial bus (USB) port or a similar interface structure. For example, also a wireless interface structure such as a wireless local area network (WLAN) port, a Bluetooth port or a 3^{rd} generation mobile telecommunications (3G) port is possible. The mobile recording device and/or the docking station can have a controller for controlling the recording and transmission of the voice message. Controller as described herein can comprise suitable means such as a processor (CPU), random access memory (RAM) and the like.

The end device can be equipped with a data storage, e.g. organized in a file system, in which the voice message can be stored and accessed. It can also run a software for manipulating and evaluating the voice message. Thereby, said software can have speech recognition means which transform the voice message into a written text for further processing. It can also provide such written text in a predefined format suitable for further processing. For example, the text can be provided in a format which can directly be imported in or used by an online shop such that the voice messages can be automatically transferred into an online shopping list or shopping chart.

By providing the temporary data storage within the docking station the transfer of the voice message from the mobile recording device to the end device can be separated in two steps. In a first step, the voice message can be transferred to the docking station only and the mobile recording device can be prepared for further use, e.g., by deleting the voice message from the data storage and thereby providing space in the data storage for further voice messages. This first step can be completely independent from any availability of the end device. In particular, the end device can be down or connection between the docking station to the end device can be interrupted or slow. Furthermore, since the docking station can be focussed and customized on said first step, the transfer of the voice message from the mobile recording device to the docking station can be performed at comparable high performance. Still further, the first step can be performed in a completely automatic fashion. For example, the first step can be automatically initiated as soon as the mobile recording device is docked in the docking station, i.e. the first docking structure of the mobile recording device is mounted to the second docking structure of the docking station. Or, first step can be comparably simply initiated, e.g., by pushing a specific button or touching a touch sensor on the docking station or on the mobile recording device. In a second step, the voice message can be transferred to the end device and the docking station can be prepared to for further use, e.g., by deleting the voice message from the temporary data storage and thereby providing space in the temporary data storage for further voice messages. The second step can be independent from the first step. For example, it can be performed at a later stage when the end device is ready and accessible.

The digital memory system according to the invention makes a convenient and efficient gathering of notes in the form of voice messages possible. Particularly providing the temporary data storage within the docking station allows for a fast and comfortable transfer of the voice messages recorded and stored on the mobile recording device.

It is to note, that even though the arrangement of the docking station described above is particularly advantageous within the digital memory system according to the invention, docking stations with temporary data storages can also be implemented in other systems. In particular, such a docking station can be advantageous when being used with any mobile device such as a smartphone, a personal digital assistant or the like from which data are to be transferred to any end device.

Turning back to the digital memory system according to the invention, the recording equipment of the mobile recording device preferably comprises a microphone. Such a microphone allows for efficiently recording spoken language in order to generate the voice message.

Preferably, the mobile recording device comprises a scanner for recording a code message and the data storage of the mobile recording device is arranged for storing the recorded code message, wherein the first docking structure of the mobile recording device, the second docking structure of the docking station and the connection structure of the docking station are arranged to transmit the code message stored in the data memory of the mobile recording device together with the voice message stored in the data memory of the mobile recording device to the end device and wherein the code message transmitted from the data storage of the mobile recording device is storable in the temporary data storage of the docking station before being transmitted to the end device. In this context, transmitting the code message together with the voice message can be performed by simultaneous or sequential transmission. The scanner can be a one dimensional scanner, a two dimensional scanner or the like. In particular, the scanner can be a scanner arranged for scanning bar codes or similar codes or identifiers. Providing a scanner within the mobile recording device allows for enriching functionality of the digital memory system. For example, it allows for conveniently memorizing products, e.g. shown in a catalogue, by simply scanning the product itself or its bar code or the like. Like this, e.g., the code messages provided by the mobile recording device can be processed in a corresponding manner as the voice messages. For example, the end device can run a software identifying the products corresponding to the code message and providing these products on a list or in a shopping chart or the like.

Preferably, the first docking structure of the mobile recording device comprises a sending unit and the second docking structure of the docking station comprises a receiving unit arranged for communicating with the sending unit of the docking structure of the mobile recording device in order to transmit the voice message from the mobile recording device to the docking station. If the mobile recording device is equipped with a scanner as mentioned above, the sending unit of the first docking structure of the mobile recording device and the receiving unit of the second docking structure of the docking station are preferably arranged to transmit the code message together with the voice message from the mobile recording device to the docking station. Transmission of the voice message and eventually of the code message from the mobile recording device to the docking station can be implemented via a plug-and-socket connection. In such an arrangement, the sending unit of the first docking structure of the mobile recording device can comprise a plug and the receiving unit of the second docking structure of the docking station can comprise a socket or vice versa. Alternatively, transmission of the voice message and eventually of the code message from the mobile recording device to the docking station can also be implemented via a contactless connection such as a radio connection or the like. Such contactless connection allows for a convenient robust operation. Particularly, potentially cumbersome plugging and damages at plugs or sockets, e.g. caused by frequent use, can be prevented. For such contactless connection, the sending unit of the first docking structure of the mobile recording device and the receiving unit of the second docking structure of the docking station preferably are arranged to communicate using infra red light (IR). Using **I**R technologies allows for a comparably simple implementation of a contactless transmission allowing a comparably high transmission performance.

Preferably, the mobile recording device comprises a touch sensor wherein the recording equipment of the mobile recording device is operated by manipulating the touch sensor. If the mobile recording device is equipped with a scanner as mentioned above, the scanner can also be operated by the touch sensor. In this case the touch sensor or another suitable means preferably is arranged to recognize a first touch signal for operating the recording equipment and a second touch signal for operating the scanner. Thereby, the first touch signal can, e.g., be defined as a touch on the touch sensor up to a predefined time period such as, e.g., up to about 1.5 seconds. The second touch signal can then, e.g., be defined as a touch on the touch sensor longer than the predefined time period such as a permanent touch. The touch sensor can also comprise one or more buttons, a touch sensitive display or any other suitable touch sensitive means. Such a touch sensor allows for a convenient simple operating of the mobile recording device by a user.

Preferably, the mobile recording device comprises an energy storage and the second docking structure of the docking station comprises a charging unit, wherein the energy storage of the mobile recording device is chargeable by the charging unit of the docking station when the first docking structure of the mobile recording device is docked to the second docking structure of the docking station. Thereby, the energy storage can particularly be a rechargeable battery.

Preferably, the mobile recording device comprises a reproduction unit for playing the stored voice message. The reproduction unit preferably comprises a loudspeaker. If the mobile recording device is equipped with a scanner as mentioned above, the reproduction unit can comprise a visual display for displaying the recorded code message. Like this, convenient checking of the recorded messages is possible.

Preferably, the mobile recording device comprises an information display. The information display can comprise sound generation means such as, e.g., a loudspeaker and/or a visual display such as, e.g., a light-emitting diode (LED) display. Such information display allows for providing a signal to a user of the mobile recording device for informing him about operation status such as, e.g., recording, storing or transmitting, or for confirming performed actions such as, e.g., touching the touch sensor.

Preferably, the mobile recording device comprises a controller arranged to control the recording equipment of the mobile recording device and the data storage of the mobile recording device and to control transmission of the voice message from the mobile recording device to the docking station. If the mobile recording device is equipped with a scanner as mentioned above, the controller can also be arranged to control the scanner and transmission of the code message from the mobile recording device to the docking station. Controlling the recording equipment can comprise starting recording the voice message via the recording equipment as soon as a signal obtained by the touch sensor is identified to be a recording signal and terminating recording the voice message via the recording equipment as soon as a signal obtained by the touch sensor is identified to be a stop signal. Thereby, the recording signal and the stop signal can be identical such as a simple touching or pushing or they can also be different, e.g. as described above.

Thereby, the controller of the mobile recording device preferably is arranged to recognize accuracy of the voice message before storing the voice message in the data storage of the mobile recording device. The term "accuracy" in this context relates to the identification of faculty voice messages. A voice message can, e.g., be recognized as inaccurate if it is an empty voice message not comprising any voice signals or spoken text. Such arrangement of the controller allows that storing of inaccurate voice messages can be prevented and an efficient data storage management can be provided. If the mobile recording device is equipped with a scanner as mentioned above, the controller can analogously be arranged to recognize accuracy of the code message before storing the code message in the data storage of the mobile recording device.

Preferably, the docking station comprises a controller arranged to control the temporary data storage of the docking station and to control transmission of the voice message from the mobile recording device to the docking station and from the docking station to the end device. If the mobile recording device is equipped with a scanner as mentioned above, the controller can analogously be arranged to control transmission of the code message from the mobile recording device to the docking station and from the docking station to the end device. Like this, efficient management of the messages can be provided.

Thereby, the controller of the mobile recording device and the controller of the docking station preferably are arranged to automatically transmit the voice message from mobile recording device to the docking station when the mobile recording device is arranged in the docking station, to store the voice message in the temporary data storage of the docking station and to automatically delete the voice message from the data storage of the mobile recording device when the voice message is stored in the temporary data storage of the docking station. For arranging the mobile recording device in the docking station, i.e. docking the mobile recording device to the docking station, the first docking structure of the mobile recording device can be mounted to the second docking structure of the docking station. Thereby, the controller of the docking station preferably is arranged to automatically transmit the voice message from the docking station to the end device when the voice message is stored in the temporary data storage of the docking station, and to automatically delete the voice message from the temporary data storage of the docking station when the voice message is transmitted from the docking station to the end device. Like this, a convenient and efficient automatic transfer and operation of the digital memory system can be provided.

Preferably, the mobile recording device comprises an essentially cylindrical housing with a bottom side, wherein the housing of the mobile recording device has a section of reduced dimension adjacent to its bottom side forming a female portion of the first docking structure of the mobile recording device, and the docking station comprises an essentially cylindrical housing with a top side, wherein the housing of the docking station has a recess corresponding to the section of reduced dimension of the housing of the mobile recording device adjacent to its top side forming a male portion of the second docking structure of the docking station. Such an arrangement of the female portion and the male portion allows for a convenient and robust docking of the mobile recording device to the docking station. Also it allows for precisely arranging the mobile recording device and the docking station to each other such that an efficient transmission is possible.

The housings of the mobile recording device as well as of the docking station can, e.g., be essentially circular, rectangular or squared cylindrical. The housings can be made of robust, e.g. plastic, material. It can particularly be shaped such that the mobile recording device and eventually also the docking station are comparably insensible for humidity, e.g. water splashes, and dirt. Like this, it is possible to provide a mobile recording device suitable for being used in a comparably difficult environment such as in a kitchen or the like. In particular, if a touch sensor as described above which can be operated through the housing and/or a sending unit of the first docking structure of the mobile recording device and a receiving unit of the second docking structure of the docking station as described above which are arranged for contactless communication are implemented, a comparably hard-wearing and resistant mobile recording device can be provided.

In addition to the digital memory system described above, the present disclosure also comprises a method for gathering and processing notes using a digital memory system as described above. The method comprises: recording a voice message via the recording equipment of the mobile recording device; storing the recorded voice message in the data storage of the mobile recording device; connecting the first docking structure of the mobile recording device to the second docking structure of the docking station; transmitting the stored voice message from the mobile recording device to the docking station; storing the transmitted voice message in the temporary data storage of the docking station; deleting voice message from the data storage of the mobile recording device after the stored voice message is transmitted from the mobile recording device to the docking station; and transmitting the voice message from the docking station to the end device.

Preferably, the method further comprises any single or any combination of the following steps: deleting the voice message from the temporary data storage of the docking station after the voice message is transmitted from the docking station to the end device; touching a touch sensor of the mobile recording device for initiating recording of the voice message; the mobile recording device providing a signal such as an acoustical and or optical signal when recording of the voice message starts and/or ends; the docking station providing a signal such as an acoustical and or optical signal when transmission of the voice message from the mobile recording device starts and/or ends; verifying accuracy of the voice message and preventing storage of inaccurate voice messages; automatically starting transmission of the voice message from the mobile recording device to the docking station as soon as the first docking structure of the mobile recording device is docked to the second docking structure of the docking station; recording a code message via a scanner of the mobile recording device; processing the code message in the same manner as the voice message; and differentiating a touching of the touch sensor between a scan touch and a voice recording touch wherein the scan touch can be a permanent touch and the voice recording touch can be a touch shorter than a predefined period of time such shorter than 1.5 seconds.

These and other aspects of the invention will be apparent from and elucidated with reference to the embodiment(s) described hereinafter.

### Brief Description of the Drawings

The digital memory system according to the invention is described in more detail hereinbelow by way of an exemplary embodiment and with reference to the attached drawings, in which:
Fig. 1 shows a side view of a mobile recording device of an embodiment of a digital memory system according to the invention;
Fig. 2 shows a bottom view of the mobile recording device of Fig. 1;
Fig. 3 shows a side view of a docking station of the digital memory system of Fig. 1; and
Fig. 4 shows a top view of the docking station of Fig. 3.

### Description of Embodiments

In the following description certain terms are used for reasons of convenience and are not to be interpreted as limiting. The terms "right", "left", "up", "down", "under" and "above" refer to directions in the figures. The terminology comprises the explicitly mentioned terms as well as their derivations and terms with a similar meaning.

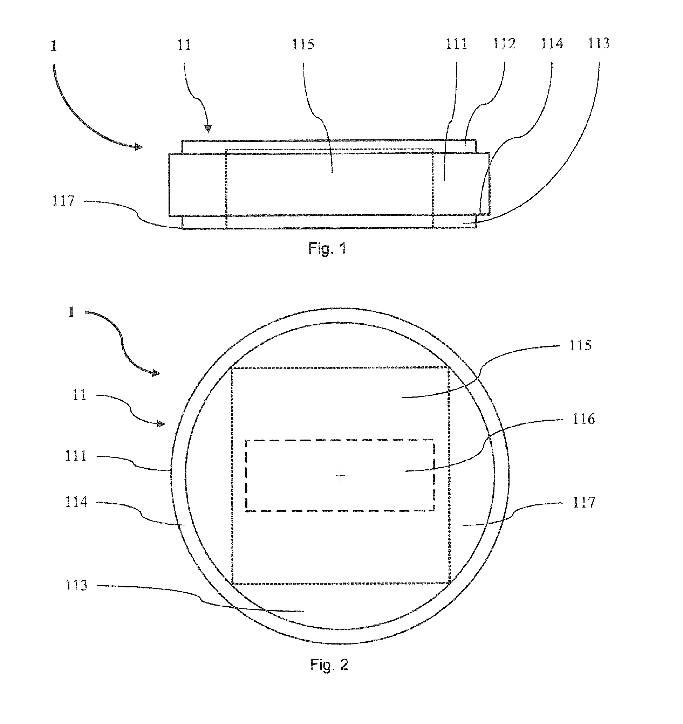

In Fig. 1 and Fig. 2 a mobile recording device 1 of an embodiment of the digital memory system according to the invention is shown. The mobile recording device 1 has an essentially circular cylindrical housing 11 with a lower bottom side 117 and an upper top side opposite to the bottom side 117. The housing 11 has a central section 111, a top section 112 and a bottom section 113. Compared to the central section 111, the top section 112 and the bottom section 113 have reduced dimensions. This is, the radius of the central section is bigger than the radius of the top section 112 and of the bottom section 113. Since the bottom section 113 is reduced in dimension with regard to the central section 111, a step 114 is arranged towards the bottom side 117 of the housing 11.

Inside the housing 11, an interior space 115 is formed having the shape of a squared cylinder. Upwardly and downwardly the interior space 115 is closed. In the interior space 115 a controller with a processor and a RAM module, a microphone, a scanner, a flash memory as data storage, a touch sensor, a light emitting diode (LED), an infrared sender and a battery as energy storage are arranged (not shown in Fig. 1 and Fig. 2). The bottom side 117 is equipped with a light transparent lens 116 such that light can be provided into and out of the interior space 115. The scanner and the infrared sender are arranged adjacent to the lens 116 such that they can communicate via the lens 116. The touch sensor and the LED are arranged adjacent to the top side of the housing 11 such that the touch sensor can be operated by touching on the top side of the housing 11 and the LED is visible from the top side of the housing 11 when it is illuminated. The bottom section 113 together with the bottom side 117, the lens 116 and the step 114 form a female portion of a first docking structure of the mobile recording device 1.

The following applies to the rest of this description. If, in order to clarify the drawings, a figure contains reference signs which are not explained in the directly associated part of the description, then it is referred to previous description sections.

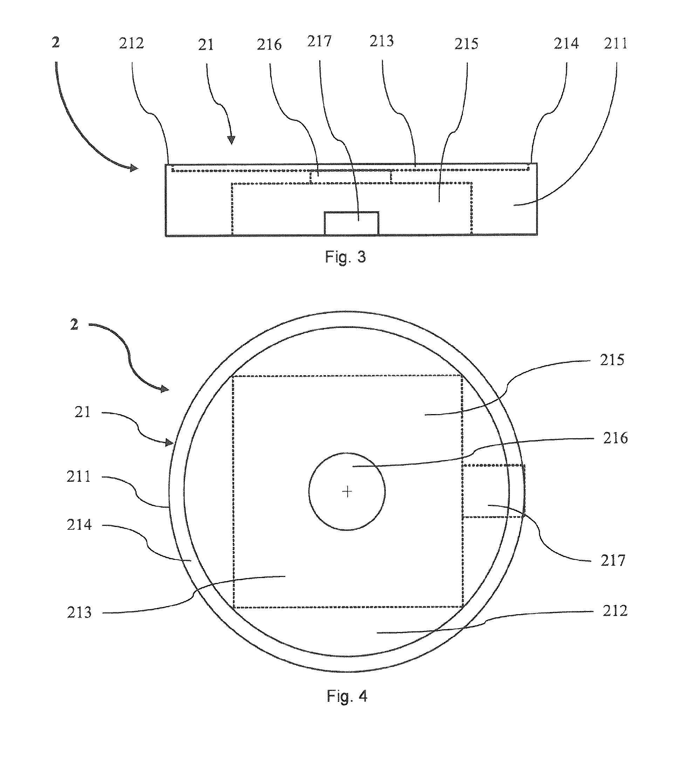

Fig. 3 and Fig. 4 show a docking station 2 of the mentioned embodiment of the digital memory system according to the invention. The docking station 2 comprises an essentially circular cylindrical housing 21 with an upper top side 212 and a lower bottom side opposite to the top side 212. The housing 21 has a body section 211 wherein a recess 213 corresponding to the bottom section 113 of the mobile recording device 1 is provided at the top side 212. The radius of the body section 211 is equal to the radius of the central section 111 of the mobile recording device 1. At the border of the recess 213 a step 214 is arranged corresponding to the step 114 of the mobile recording device 1.

Inside the housing 21, an interior space 215 is formed having the shape of a squared cylinder. Upwardly and downwardly the interior space 215 is closed. In the interior space 215 a controller with a processor and a RAM module, a infrared receiver, a connection structure with a universal serial bus (USB) mini port extending into a lateral passage 217 opening to a side surface of the body section 211 and a flash memory as temporary data storage are arranged (not shown in Fig. 3 and Fig. 4). The top side 212 is equipped with a light transparent lens 216 such that light can be provided into and out of the interior space 215. The infrared receiver is arranged adjacent to the lens 216 such that it can communicate via the lens 216. The recess 213 together with the top side 212, the lens 216 and the step 214 form a male portion of a second docking structure of the docking station 2.

In use of the mobile recording device 1, notes can be gathered on one hand by touching the top side of the housing for a period of less than 1.5 seconds. The touch sensor provides the according signal to the controller which recognizes this signal and initiates recording. Spoken words are then recorded via the microphone until a second signal is recognized by the controller via the touch sensor. The spoken words are transformed by the controller into a voice message, e.g., in the waveform audio file (WAV) format. Prior storing the voice message, the controller verifies its accuracy, i.e. the controller checks if the voice message contains audio information possibly being spoken words, If the controller identifies the voice message to be accurate, it stores the voice message in the data storage. Otherwise, no storing is performed.

On the other hand notes can be gathered by the mobile recording device by touching the top side of the housing for a period of more than 1.5 seconds. The touch sensor provides the according signal to the controller which recognizes this signal and initiates scanning. The scanner then scans via the lens and the controller evaluates the scanned image for identifying bar codes. The identified bar codes are transformed by the controller into a bar code message. Prior storing the bar code message, the controller verifies its accuracy, i.e. the controller checks if the scanned image contains information possibly being a bar code. If the controller identifies the bar code message to be accurate, it stores it in the data storage. Otherwise, no storing is performed. The flash memory is foreseen to store plural voice and/or bar code messages.

For transferring the messages to an end device, in a first step the mobile recording device 1 is docked to the docking station 2 by arranging the female portion of the first docking structure of the mobile recording device 1 into the male portion of the second docking structure of the docking station 2. This is, the bottom section 113 of the mobile recording device 1 is arranged in the recess 213 of the docking station 2 such that the lens 116 of the mobile recording device 1 is positioned adjacent to the lens 216 of the docking station 2. The controllers of the docking station 2 and of the mobile recording device 1 then initiate transmission of the messages from the mobile recording device 1 to the docking station 2. In particular, the messages are sent by the infrared sender via the lenses 116, 216 and received by the infrared receiver one after the other. The messages are stored in the temporary data storage of the docking station 2 and thereafter deleted in the data storage of the mobile recording device 1.

In a second step, the docking station 2 is connected to the end device by the USB mini port. When the end device is ready, the messages are transmitted from the docking station 2 to a file system of the end device via the USB mini port. The messages which are successfully transmitted to the end device are then deleted from the temporary data storage of the docking station by the controller.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below.

The invention also covers all further features shown in the Figs. individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims ort the exemplary embodiments as well as subject matter comprising said features.

Furthermore, in the claims the word "comprising" does not exclude other elements or steps, and the indefinite article "a" or "an" does not exclude a plurality. A single unit or step may fulfill the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. A computer program or software may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method mentioned above. Any reference signs in the claims should not be construed as limiting the scope.

## Claims

1. Digital memory system comprising:
a mobile recording device (1) having a first docking structure (113, 114) (113, 114), a recording equipment for recording a voice message and a data storage for storing the recorded voice message; and
a docking station (2) having a second docking structure (213, 214) corresponding to the first docking structure (113, 114) of the recording device and a connection structure for connecting the docking station (2) to an end device; wherein
the first docking structure (113, 114) of the mobile recording device, the second docking structure (213, 214) of the docking station (2) and the connection structure of the docking station (2) are arranged to transmit the voice message stored in the data memory of the mobile recording device (1) to the end device,
**characterized in that**
the docking station (2) comprises a temporary data storage in which the voice message transmitted from the data storage of the mobile recording device (1) is storable before being transmitted to the end device.

2. Digital memory system according to claim 1, wherein the recording equipment of the mobile recording device (1) comprises a microphone.

3. Digital memory system according to claim 1 or 2, wherein the mobile recording device (1) comprises a scanner for recording a code message and the data storage of the mobile recording device (1) is arranged for storing the recorded code message, wherein the first docking structure (113, 114) of the mobile recording device, the second docking structure (213, 214) of the docking station (2) and the connection structure of the docking station (2) are arranged to transmit the code message stored in the data memory of the mobile recording device (1) together with the voice message stored in the data memory of the mobile recording device (1) to the end device and wherein the code message transmitted from the data storage of the mobile recording device (1) is storable in the temporary data storage of the docking station (2) before being transmitted to the end device.

4. Digital memory system according to any one of the preceding claims, wherein the first docking structure (113, 114) of the mobile recording device (1) comprises a sending unit and the second docking structure (213, 214) of the docking station (2) comprises a receiving unit arranged for communicating with the sending unit of the docking structure of the mobile recording device (1) in order to transmit the voice message from the mobile recording device (1) to the docking station.

5. Digital memory system according to claim 4, wherein sending unit of the first docking structure (113, 114) of the mobile recording device (1) and the receiving unit of the second docking structure (213, 214) of the docking station (2) are arranged to communicate using infra red light.

6. Digital memory system according to any one of the preceding claims, wherein the mobile recording device (1) comprises a touch sensor, wherein the recording equipment of the mobile recording device (1) is operated by manipulating the touch sensor.

7. Digital memory system according to any one of the preceding claims, wherein the mobile recording device (1) comprises an energy storage and the second docking structure (213, 214) of the docking station (2) comprises a charging unit, wherein the energy storage of the mobile recording device (1) is chargeable by the charging unit of the docking station (2) when the first docking structure (113, 114) of the mobile recording device (1) is docked to the second docking structure (213, 214) of the docking station.

8. Digital memory system according to any one of the preceding claim, wherein the mobile recording device (1) comprises a reproduction unit for playing the stored voice message.

9. Digital memory system according to any one of the preceding claims, wherein the mobile recording device (1) comprises an information display.

10. Digital memory system according to any one of the preceding claims, wherein the mobile recording device (1) comprises a controller arranged to control the recording equipment of the mobile recording device (1) and the data storage of the mobile recording device (1) and to control transmission of the voice message from the mobile recording device (1) to the docking station.

11. Digital memory system according to claim 10, wherein the controller of the mobile recording device (1) is arranged to recognize accuracy of the voice message before storing the voice message in the data storage of the mobile recording device.

12. Digital memory system according to any one of the preceding claims, wherein the docking station (2) comprises a controller arranged to control the temporary data storage of the docking station (2) and to control transmission of the voice message from the mobile recording device (1) to the docking station (2) and from the docking station (2) to the end device.

13. Digital memory system according to claim 10 or 11 and 12, wherein the controller of the mobile recording device (1) and the controller of the docking station (2) are arranged to automatically transmit the voice message from mobile recording device (1) to the docking station (2) when the mobile recording device (1) is arranged in the docking station, to store the voice message in the temporary data storage of the docking station (2) and to automatically delete the voice message from the data storage of the mobile recording device (1) when the voice message is stored in the temporary data storage of the docking station.

14. Digital memory system according to claim 13, wherein the controller of the docking station (2) is arranged to automatically transmit the voice message from docking station (2) to the end device when the voice message is stored in the temporary data storage of the docking station, and to automatically delete the voice message from the temporary data storage of the docking station (2) when the voice message is transmitted from the docking station (2) to the end device.

15. Digital memory system according to any one of the preceding claims, wherein the mobile recording device (1) comprises an essentially cylindrical housing with a bottom side, wherein the housing of the mobile recording device (1) has a section of reduced dimension adjacent to its bottom side forming a female portion of the first docking structure (113, 114) of the mobile recording device, and the docking station (2) comprises an essentially cylindrical housing with a top side, wherein the housing of the docking station (2) has a recess corresponding to the section of reduced dimension of the housing of the mobile recording device (1) adjacent to its top side forming a male portion of the second docking structure (213, 214) of the docking station.
